# FASCICULE DE BREVET EUROPEEN

(11) **EP 1 700 782 B1**
(45) Date de publication et mention de la délivrance du brevet: **15.04.2009**
(21) Numéro de dépôt: 06290330.7
(22) Date de dépôt: 28.02.2006
(51) Int. Cl.: B64C 27/00, F16F 7/10, F16F 7/116

(54) **Systeme adaptatif d'absorption des vibrations**
Adaptive Schwingungsdämpferanordnung
Adaptive vibration absorbing system

(30) Priorité: 08.03.2005 FR 0502310
(43) Date de publication de la demande: 13.09.2006
(73) Titulaire: HUTCHINSON, 75008 Paris (FR)
(72) Inventeur: Nicq, Geoffrey, Burbank, CA 91510 (US); Noe, Mathieu, 91610 Ballancourt (FR)
(74) Mandataire: Jacquard, Philippe Jean-Luc

(56) Documents cités:
- EP-A- 0 872 662
- EP-A- 0 872 663
- FR-A- 2 739 670
- US-A- 4 693 217
- US-A- 5 551 650
- US-A- 5 802 184
- US-A- 6 009 986

## Description

L'invention porte sur un système adaptatif d'absorption des vibrations, particulièrement pour l'aéronautique.

Il est bien connu d'utiliser des systèmes masse-ressort, dits communément « batteurs », comme dispositifs d'absorption de vibrations. En particulier, de tels systèmes sont utilisés dans les aéronefs (avions, hélicoptères) pour réduire, à l'intérieur du fuselage, le bruit induit par les moteurs, les rotors et/ou les hélices. Par exemple, dans un avion à hélice, les pales de l'hélice produisent des impulsions de pression qui frappent la surface externe de l'aéronef, provoquant une vibration périodique de sa structure, vibration dont la fréquence fondamentale est donnée par la fréquence de rotation de l'hélice multipliée par le nombre de pales de l'hélice.

Un batteur conventionnel, constitué essentiellement par une masse suspendue à une lame de ressort, présente l'inconvénient d'avoir une fréquence propre fixe, et donc d'absorber efficacement les vibrations à une seule fréquence. Autrement dit, un tel batteur ne produit une réduction appréciable du bruit interne au fuselage que lorsque le ou les moteurs de l'aéronef tournent à une vitesse de rotation déterminée. Ce problème est d'autant plus grave que, pour obtenir une absorption importante, le batteur doit présenter un facteur de qualité Q élevé, ce qui entraîne une bande d'absorption étroite. Si, par exemple, le facteur Q vaut 150, la largeur relative de la bande d'absorption Δω/ω est inférieure à 0,7% : il suffit d'un écart minime entre la vitesse nominale de rotation des hélices et la vitesse réelle pour que le batteur soit complètement inefficace.

Pour cette raison, il a été proposé d'utiliser des batteurs accordables pour réaliser un système adaptatif d'absorption des vibrations. Dans un batteur accordable, la fréquence propre du système masse-ressort est modifiée d'une manière contrôlée, typiquement en agissant sur la constante d'élasticité k du ressort. Plusieurs techniques ont été proposée pour effectuer l'accord : par exemple, on peut modifier le module d'Young du ressort en utilisant des matériaux à mémoire de forme, agir sur sa longueur en déplaçant la masse, changer sa géométrie ou appliquer un précontrainte.

Un système adaptatif d'absorption des vibrations est constitué par un ensemble de batteurs accordables (de quelques unités jusqu'à plusieurs centaines) contrôlés de manière à suivre les variations de fréquence des vibrations.

Les documents EP 0 872 662 et EP 0 872 663 divulguent un appareil réalisant une absorption adaptative des vibrations. Il comprend un premier accéléromètre qui mesure l'accélération de la structure dont les vibrations doivent être amorties (le fuselage) et un deuxième accéléromètre qui mesure l'accélération de la masse oscillante du batteur. Les signaux issus de ces accéléromètres sont filtrés à l'aide d'un filtre passe-bande accordable pour en extraire la composante à la fréquence des vibrations à amortir, puis leurs phases sont comparées : il est connu que, lorsque le batteur est accordé, le déphasage φ entre les oscillations de la structure et celles de la masse dudit batteur vaut 90°. Par conséquent, le contrôleur (qui peut, par exemple être un PID) doit modifier en permanence la constante d'élasticité k du ressort de manière à maintenir φ proche de la valeur-cible 90° (ou, de manière équivalente, cos(φ) proche de 0). La fréquence des vibrations à amortir, qui doit être extraite des signaux bruts issus du premier et du deuxième accéléromètre, est mesurée à l'aide d'un troisième accéléromètre, situé en correspondance d'un moteur de l'aéronef, et d'un circuit cinémomètre ; le filtre passe-bande est accordé à cette fréquence. Les dispositifs d'absorption des vibrations et les trois accéléromètres sont fixés à un même support qui est physiquement en contact aussi bien avec le fuselage qu'avec un moteur.

Cet appareil comporte un certain nombre d'inconvénients. Premièrement, il est très difficile d'extraire une information de fréquence fiable à partir du signal dudit troisième accéléromètre. Deuxièmement, l'accord des batteurs, contrôlé par une commande en boucle fermée, peut être relativement lent : par conséquent, l'appareil peut s'avérer incapable de suivre les variations de régime des moteurs et, en outre, une phase d'accord relativement longue entraîne une consommation d'énergie importante. Troisièmement, son architecture est adaptée au cas d'un faible nombre de batteurs, constituant une unité autonome disposée à proximité d'un moteur, mais ne conviendrait pas à une situation où un très grand nombre de dispositifs d'amortissements serait reparti sur toute la structure de l'aéronef. Quatrièmement, la structure mécanique des batteurs décrits dans ces documents rend difficile l'obtention d'une masse totale de l'ordre de 1 kg ou moins ; la limitation de la masse embarquée est un objectif important lorsque plusieurs dizaines ou centaines de dispositifs d'absorption des vibrations doivent être installés sur un aéronef.

Le document US 5 551 650 décrit un système adaptatif d'absorption des vibrations comprenant une pluralité de dispositifs actifs d'absorption des vibrations pilotés par une unité de contrôle centrale, éventuellement par l'intermédiaire d'amplificateurs de puissance. Etant donné que les dispositifs d'absorption des vibrations de ce système sont actifs, ils doivent recevoir en permanence des signaux de pilotage de l'unité de contrôle centrale, ce qui impose l'utilisation de connexions individuelles à la place du bus de communication unique de l'invention. L'utilisation de telles connexions individuelles n'est pas souhaitable pour des raisons de coût, encombrement et poids, et cela particulièrement dans le cas d'un système comprenant un grand nombre de ces dispositifs.

Des dispositifs accordables d'absorption des vibrations sont divulgués par les documents US 6,009,986 (batteur « papillon » avec ressorts à géométrie variable) et FR 2 739 670 (dispositif à déplacement de masse). Pour des raisons diverses, qui seront discutées plus en détail dans le cadre de la description de l'invention, de tels dispositifs ne donnent pas entière satisfaction.

Un but de la présente invention est de fournir un système adaptatif d'absorption des vibrations qui ne présente pas au moins certains des inconvénients précités.

Un objet de l'invention est donc un système adaptatif d'absorption des vibrations comportant :
- une pluralité de dispositifs dynamiques accordables d'absorption des vibrations, chacun comprenant au moins un actionneur pour modifier sa fréquence d'absorption des vibrations ; caractérisé en ce qu'il comporte également :
- une pluralité d'unités de contrôle locales, chacune reliée à un ou plusieurs desdits dispositifs dynamiques accordables, pour générer des signaux de pilotage desdits actionneurs ;

- une unité de contrôle centrale pour adresser des signaux de commande à chacune desdites unités de contrôle locales, ladite unité de contrôle centrale comportant au moins une entrée pour recevoir une information indicative de la fréquence des vibrations induites par au moins une source de vibrations et un moyen pour générer lesdits signaux de commande sur la base de ladite information de fréquence ; et
- un bus pour transmettre lesdits signaux de commande de ladite unité de contrôle centrale aux dites unités de contrôle locales.

De préférence, dans un tel système l'unité de contrôle centrale :
- comporte au moins une entrée pour recevoir une information indicative de la fréquence des vibrations induites par chacune d'une pluralité de sources de vibrations ; et
- est prévue pour générer des signaux de commande adaptés à déterminer l'accord d'un sous-ensemble de ladite pluralité de dispositifs dynamiques accordables d'absorption des vibrations avec la fréquence des vibrations induites par chacune desdites sources de vibrations.

Selon un premier mode de réalisation de l'invention, ladite unité de contrôle centrale est prévue pour générer et adresser aux dites unités de contrôle locales via ledit bus des signaux de commande comprenant des signaux de contrôle pour effectuer :
- initialement, un premier accord en fréquence en boucle ouverte desdits dispositifs dynamiques accordables d'absorption des vibrations sur la base d'une loi de contrôle en boucle ouverte propre à chaque dispositif ou à chaque groupe de dispositifs reliés à une même unité de contrôle locale ; et
- ensuite, une correction d'accord en fréquence en boucle fermée ;
tandis que lesdites unités de contrôle locales sont prévues pour :
- convertir lesdits signaux de contrôle en des signaux de pilotage desdits actionneurs ; et
- adresser à ladite unité de contrôle centrale des signaux de retour permettant ladite correction en boucle fermée.

De préférence, ladite unité de contrôle centrale est prévue pour modifier de manière adaptative chaque loi de contrôle en boucle ouverte sur la base des corrections en boucle fermée correspondantes.

Selon un premier mode de réalisation de l'invention :
- ladite unité de contrôle centrale est prévue pour générer et adresser aux dites unités de contrôle locales via ledit bus des signaux de commande comprenant une information de fréquence des vibrations à absorber ; et
- chaque unité de contrôle locale est prévue pour générer des signaux de contrôle pour effectuer :

- initialement, un premier accord en fréquence en boucle ouverte desdits dispositifs dynamiques accordables d'absorption des vibrations sur la base d'une loi de contrôle en boucle ouverte ; et
- ensuite, une correction d'accord en fréquence en boucle fermée ;
et pour convertir lesdits signaux de contrôle en signaux de pilotage desdits actionneurs.

De préférence, chaque unité de contrôle locale est prévue pour modifier de manière adaptative sa loi de contrôle en boucle ouverte sur la base des corrections en boucle fermée correspondantes.

Selon d'autres caractéristiques avantageuses d'un tel système :

Ladite unité de contrôle centrale est prévue pour effectuer également des opérations de monitorage (ou surveillance) des disfonctionnement desdits dispositifs dynamiques accordables d'absorption des vibrations.

Ladite unité de contrôle centrale est prévue pour effectuer également des opérations d'activation et désactivation desdits dispositifs dynamiques accordables d'absorption des vibrations sur la base d'un niveau de consommation énergétique dudit système.

Un autre objet de l'invention est l'application d'un tel système à l'absorption des vibrations du fuselage d'un aéronef générées par ses dispositifs de propulsion, dans laquelle ladite information indicative de la fréquence des vibrations induites par au moins une source de vibrations est une information de cadence de rotation d'au moins un dispositif de propulsion de l'aéronef, tel qu'une hélice ou un rotor.

D'autres caractéristiques, détails et avantages de l'invention ressortiront à la lecture de la description faite en référence aux dessins annexés donnés à titre d'exemple et qui représentent, respectivement :
- la figure 1, un schéma de principe d'un système adaptatif d'absorption des vibrations selon l'invention ;
- les figures 2A et 2B, une première variante d'un dispositif accordable d'absorption des vibrations du type à déplacement de masse ;
- la figure 2C, une deuxième variante d'un dispositif accordable d'absorption des vibrations du type à déplacement de masse ;
- les figures 3A, 3B et 3C, une première variante d'un dispositif accordable d'absorption des vibrations du type « papillon » avec ressorts à géométrie variable ; et
- la figure 3D, une deuxième variante d'un dispositif accordable d'absorption des vibrations du type « papillon » avec ressorts à géométrie variable.

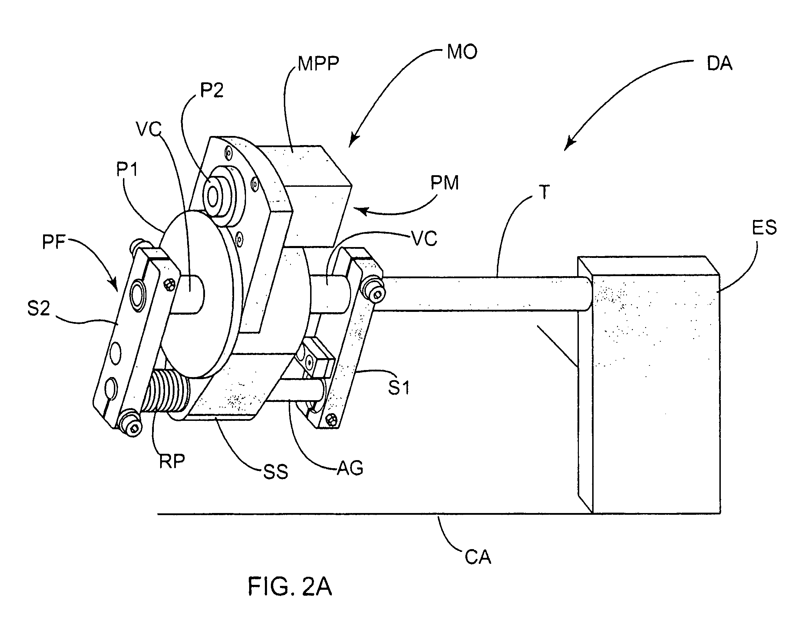

Les dispositifs des Figures 2A à 3D ne font pas partie, par eux-mêmes, de l'invention.

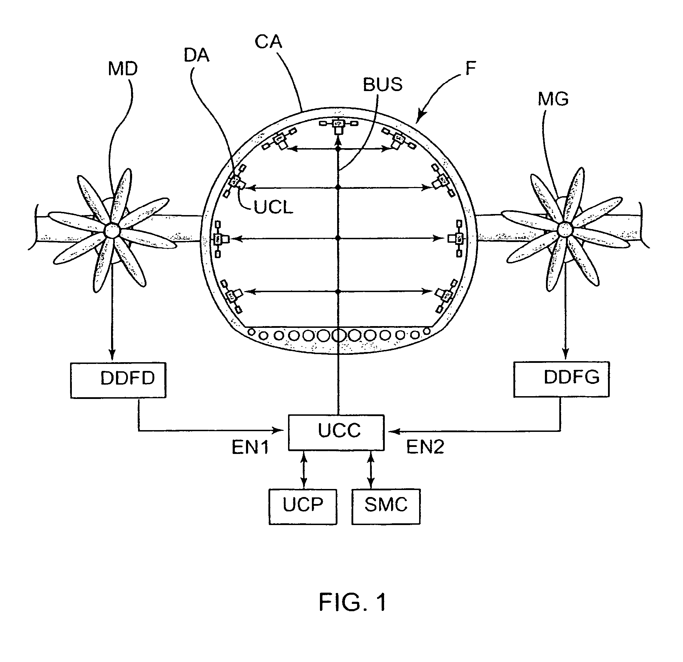

La figure 1 montre un système adaptatif d'absorption des vibrations installé dans le fuselage F d'un avion (en section sur la figure) comportant quatre moteurs à hélice, dont seulement les deux internes, MG et MD à gauche et à droite respectivement, sont représentés. Comme les moteurs externes tournent à la même cadence que lesdits moteurs internes MG et MD, seulement ces derniers seront considérés dans la suite. Les hélices à huit pales entraînées par ces quatre moteurs constituent les sources des vibrations que le système de l'invention doit absorber. Une pluralité de dispositifs dynamiques accordables d'absorption des vibrations (batteurs) DA du type à papillon sont fixés sur le contour des cadres CA du fuselage.

On considère que la partie gauche dudit fuselage est principalement affectée par les vibrations provoquées par le moteur MG (et le moteur externe du côté gauche, non représenté), alors que la partie droite est principalement influencée par le moteur MD (et le moteur externe du côté droit, également non représenté). Pour cette raison, il est souhaité que les batteurs DA situés sur la partie gauche du fuselage soient accordés à la fréquence des vibrations induites par le moteur MG et que les batteurs DA situés sur la partie droite du fuselage soient accordés à la fréquence des vibrations induites par le moteur MD (ou tout moteur tournant à la même cadence).

Des dispositifs de détermination de fréquence DDFG et DDFD sont prévus pour déterminer la fréquence des vibrations induites par les moteurs MG et MD respectivement. Au lieu d'être être constitués par des accéléromètres et des circuits cinémomètres, comme dans le cas des documents EP 0 872 662 et EP 0 872 663 précités, ces dispositifs effectuent de préférence une mesure de la cadence de rotation des hélices. Comme il a été expliqué plus haut, cette cadence constitue une information indicative de la fréquence des vibrations à absorber car la fréquence fondamentale desdites vibrations est égale à cette cadence multipliée par le nombre de pales de l'hélice (8, dans ce cas). En effet, une mesure de cadence est plus simple et fiable qu'une mesure de fréquence d'une vibration qui peut avoir, en réalité, un spectre complexe. Ladite mesure de cadence peut être effectuée par des méthodes connues, électriques ou optiques, par exemple directement sur les éléments mécaniques de transmission de force aux hélices. Les signaux de cadence ainsi acquis sont transmis, à travers des entrées EN1, EN2 à une unité de contrôle centrale UCC qui communique avec les différentes unités de contrôle local UCL des batteurs DA par l'intermédiaire d'un bus BUS.

D'une manière générale, l'unité de contrôle centrale UCC a pour fonction de générer, sur la base des signaux reçus par les dispositifs de détermination de fréquence DDFG et DDFD, des signaux de commande desdites unités de contrôle locales, signaux qui leur sont adressés par l'intermédiaire du bus BUS. Elle comporte donc au moins un moyen matériel et/ou logiciel prévu à cet effet.

Selon un premier mode de réalisation de l'invention (contrôle centralisé), l'UCC reçoit de chaque batteur DA, via le bus BUS, des signaux d'accélération du fuselage et de la masse oscillante, ou bien une information de déphasage φ entre ces deux signaux, et génère en réponse des signaux de contrôle d'accord, que les contrôleurs locaux UCL convertissent en signaux de puissance qui pilotent directement les actionneurs qui modifient la fréquence de résonance des batteurs. Il n'est pas avantageux que l'UCC génère directement ces signaux de pilotage, car ils ne pourraient pas être transmis à travers un bus unique : un grand nombre de câbles serait donc nécessaire pour relier chaque actionneur à l'UCC, ce qui aurait un encombrement, un poids et un coût inacceptables dans des nombreuses applications. Un tel contrôle centralisé est envisageable dans les applications où la fréquence à laquelle chaque batteur doit être accordé varie d'une façon relativement lente. En effet, l'UCC ne peut pas contrôler simultanément tous les batteurs : plutôt, elle s'intéressera à chacun d'entre eux à tour de rôle, ou elle desservira prioritairement les batteurs qui présentent un désaccord important ; dans ce dernier cas, un signal d'interrogation de l'UCC peut être généré par chaque ULC lorsque le déphasage φ devient sensiblement différent de 90°.

Dans un deuxième mode de réalisation de l'invention (contrôle décentralisé), au contraire, l'UCC se limite à transmettre à chaque UCL quelle est la fréquence sur laquelle le batteur correspondant doit s'accorder; il peut s'agir de la fréquence fondamentale de l'un des moteurs MG, MD, d'une fréquence harmonique ou même d'un battement entre ces différentes fréquences (particulièrement pour les batteurs situés à une distance égale des deux moteurs).

Dans les deux cas, l'unité de contrôle centrale UCC peut également accomplir d'autres fonctions : typiquement, elle peut envoyer à chaque UCL un signal d'activation ou de désactivation. En effet, des contraintes de consommation énergique peuvent imposer de désactiver, à un moment donné, la totalité ou une partie des batteurs ; pour cette raison, l'UCC est en communication avec l'unité de contrôle de puissance UCP de l'avion. La désactivation peut se faire selon un ordre prédéfini (par exemple, en désactivant d'abord les batteurs les plus éloignés de la cabine de pilotage, surtout dans le cas d'un avion de transport de matériel), ou bien en identifiant les batteurs qui consomment le plus d'énergie.

En outre, l'UCC peut communiquer au système de monitorage central SMC de l'avion des disfonctionnements des batteurs, détectés par les UCL correspondantes ou par l'UCC elle-même. Plus généralement, les UCL peuvent envoyer à l'UCC des signaux de monitorage (ou surveillance) du fonctionnement des batteurs DA correspondants via le bus BUS et cette dernière peut les afficher de manière à faciliter la maintenance du système.

Le fait que la communication entre l'UCC et les UCL s'effectue par l'intermédiaire d'un bus BUS est important pour au moins deux raisons. D'abord, l'utilisation d'un bus à la place de connexions individuelles minimise l'utilisation de câbles, ce qui réduit le poids et l'encombrement du système. Deuxièmement, cela permet de reconfigurer le système sans avoir à modifier son câblage. Cette caractéristique peut être importante surtout dans des applications autres que celle représentée sur la figure 1 : on peut par exemple considérer le cas d'un avion avec deux moteurs sur les ailes et un moteur de queue. En fonction du régime de fonctionnement desdits moteurs, les vibrations dans une partie de l'avion peuvent être principalement influencées par les uns ou par l'autre : grâce à l'utilisation du bus BUS, l'UCC peut changer la fréquence d'accord des batteurs situés dans cette partie même pendant le vol.

Le contrôle d'accès au bus des différentes UCL est effectué par des techniques conventionnelles.

Dans un mode de réalisation particulier, le bus BUS est utilisé pour les taches d'activation / désactivation des batteurs et de monitorage (ou surveillance) des disfonctionnements, tandis que l'information de fréquence des vibrations à absorber (ou, de manière équivalente, de cadence des moteurs) est superposée à l'alimentation électrique (non représentée). Le nombre total de câble par batteur est donc de quatre : deux pour le bus et deux pour l'alimentation.

Dans un autre mode de réalisation, le bus est également utilisé pour effectuer un contrôle centralisé des batteurs, comme décrit ci-dessus.

Dans encore un autre mode de réalisation, le bus transporte également l'alimentation électrique en courant continu, ce qui réduit à deux le nombre de câbles par batteur.

Une réduction ultérieure peut être obtenue en groupant les batteurs en familles de dispositifs reliés à une même UCL et qui sont considérées comme une seule entité par l'unité de contrôle centrale UCC.

On passe maintenant à considérer l'algorithme de contrôle de chaque batteur, indépendamment du fait qu'il soit exécuté au niveau central par l'UCC ou au niveau local par les différentes UCL. Il est possible d'utiliser un contrôle en boucle fermé du type décrit par les documents EP 0 872 662 et EP 0 872 663 précités : des signaux d'accélération de la structure de support et de la masse oscillante sont acquis, par exemple par des accéléromètres, et filtrés pour en extraire la composante de fréquence à absorber, ensuite leur phase est comparée et un actionneur est piloté de manière à maintenir le déphasage φ aussi proche que possible de 90°. La commande peut se faire à l'aide d'un PID, avantageusement à l'aide d'une commande P-D non-linéaire, dans laquelle la partie proportionnelle dépend de cos (φ) et de certaines de ses puissances impaires (3 et 5, par exemple), alors que la partie « dérivée » est proportionnelle à la dérivée temporelle de cos(φ).

Cependant, il est avantageux d'utiliser une approche hybride boucle ouverte - boucle fermée : un premier contrôle en boucle ouverte permet de se rapprocher très rapidement d'une condition d'accord de fréquence, puis le contrôle en boucle fermée, tel que décrit ci-dessus, effectue des corrections permettant un réglage fin. Le contrôle en boucle ouverte consiste essentiellement en une table de correspondance qui associe à chaque valeur de fréquence à absorber une position nominale de l'actionneur qui effectue l'accord (par exemple, si cet actionneur est un moteur pas-à-pas, il y aura une correspondance fréquence - nombre de pas à partir d'une position de référence). Lorsque l'UCL reçoit de l'UCC l'information que le batteur doit s'accorder sur une fréquence f déterminée, l'actionneur se porte dans la position prévue par ladite table de correspondance pour ladite fréquence f ; ensuite, le filtre passe-bande du contrôleur en boucle fermée est accordé sur cette même fréquence f et la commande se poursuit en boucle fermée de la manière connue de l'art antérieur. Une fois qu'un accord satisfaisant a été obtenu, le batteur DA ne nécessite plus aucun signal de commande, de moins tant que la fréquence des vibrations à absorber n'a pas changé (ou en cas de déréglage au bout d'un certain temps de fonctionnement). En cas de faibles variations de la fréquence f, l'accord peut être maintenu simplement par l'action du contrôle en boucle fermée, mais en cas de variations plus importantes une intervention du contrôle en boucle ouverte s'avérera avantageuse. L'utilisation d'un tel contrôle hybride réduit les transitoires, ce qui améliore l'absorption des vibrations et diminue la consommation d'énergie (le système ne consomme de l'énergie que pendant les réglages : dans le fonctionnement en régime, l'absorption des vibrations se fait d'une façon entièrement passive).

La table de correspondance qui permet la réalisation du contrôle en boucle ouverte peut être prédéfinie une fois pour toutes lors de l'installation du système, mais avantageusement elle est adaptative, c'est à dire qu'elle présente une forme d'apprentissage. Cela signifie qu'elle est mise à jour à chaque utilisation en prenant en compte les corrections effectuées par le contrôle en boucle fermée. Ainsi, si par exemple la table de correspondance associe initialement la fréquence f à une position x de l'actionneur et le contrôle en boucle fermée effectue un déplacement δx à partir de cette position x pour atteindre un meilleur accord de fréquence, la table de correspondance est modifiée pour associer à la fréquence f la position x+δx (ou une position x+α·δx avec α<1, pour éviter des instabilités). De cette façon, il n'est pas nécessaire d'effectuer un calibrage très fin au moment de l'installation ; en outre, le contrôle avec apprentissage corrige automatiquement les variations dues au vieillissement des composantes.

De préférence, bien que cela ne soit pas visible sur la figure 1, un système adaptatif d'absorption des vibrations comporte plusieurs types de batteurs accordables : un premier type est destiné à absorber la fréquence fondamentale des vibrations induites par les moteurs, les autres types sont destinés à absorber les fréquences harmoniques, par exemple la deuxième et troisième harmonique. L'utilisation d'un seul type de batteur, accordable sur une bande suffisamment large pour couvrir lesdites harmoniques, est envisageable et présente l'avantage d'une plus grande flexibilité du système, mais il s'agit d'une solution techniquement complexe. En tout cas, cela ne permet pas de réduire le nombre total de batteurs, car chaque dispositif ne peut pas absorber plusieurs fréquences simultanément.

A titre d'exemple, un système complet pour la réduction du bruit à l'intérieur d'un avion de transport quadrimoteur peut comporter un total de 500 batteurs accordables, 100 pour la fréquence fondamentale, 200 pour chacune des deuxième et troisième harmoniques.

Les unités de contrôle UCL et UCC peuvent être réalisées selon des techniques connues ; de préférence elles seront basées sur des microprocesseurs programmés de manière adaptée, mais des circuits numériques spécifiques pourront aussi être utilisés.

Après avoir décrit le système dans son ensemble, on passe à considérer des dispositifs accordables d'absorption des vibrations, ou batteurs accordables, adaptés à sa réalisation.

La figure 2A montre une vue en perspective d'un batteur accordable DA du type à déplacement de masse. Un tel batteur est essentiellement constitué d'un élément de support ES qui permet sa fixation a un cadre CA de l'avion, une tige flexible T, typiquement en acier, fixée par une extrémité audit élément de support ES et une masse oscillante MO fixée à l'extrémité libre de la tige T. La masse oscillante MO comporte à son tour une partie fixe PF et une partie mobile PM ; la partie fixe PF est solidaire de la tige T, alors que la partie mobile PM peut se déplacer parallèlement à cette dernière ; dans la figure, la partie PM est représentée à l'extrémité distale de sa course. Le système masse MO - tige T constitue un oscillateur mécanique dont la fréquence de résonance peut être ajustée grâce au déplacement de la partie mobile PM de la masse oscillante MO. Pour donner un exemple concret, la masse de la partie mobile peut être de 700 g, celle de la partie fixe de 200 g et l'oscillateur dans son ensemble peut être contenu dans un carter en forme de parallélépipède de 90 mm x 60 mm x 130 mm et avoir un poids de l'ordre de 1100 g. Un tel oscillateur peut présenter un facteur de qualité Q de l'ordre de 90 ou plus et être accordable entre 87Hz et 117 Hz par un déplacement de la partie mobile PM de 20 mm environ. Ces fréquences correspondent aux fréquences fondamentales des vibrations induites par une hélice de propulsion à 8 pales dont la cadence de rotation peut varier entre 655 et 842 RPM (tours par minute) ; il s'agit là de valeurs réalistes pour des applications aéronautiques. Il faut noter que, dans la figure 2A, la tige T est parallèle à la surface dont les vibrations doivent être amorties (cadre CA), mais un montage perpendiculaire est également possible.

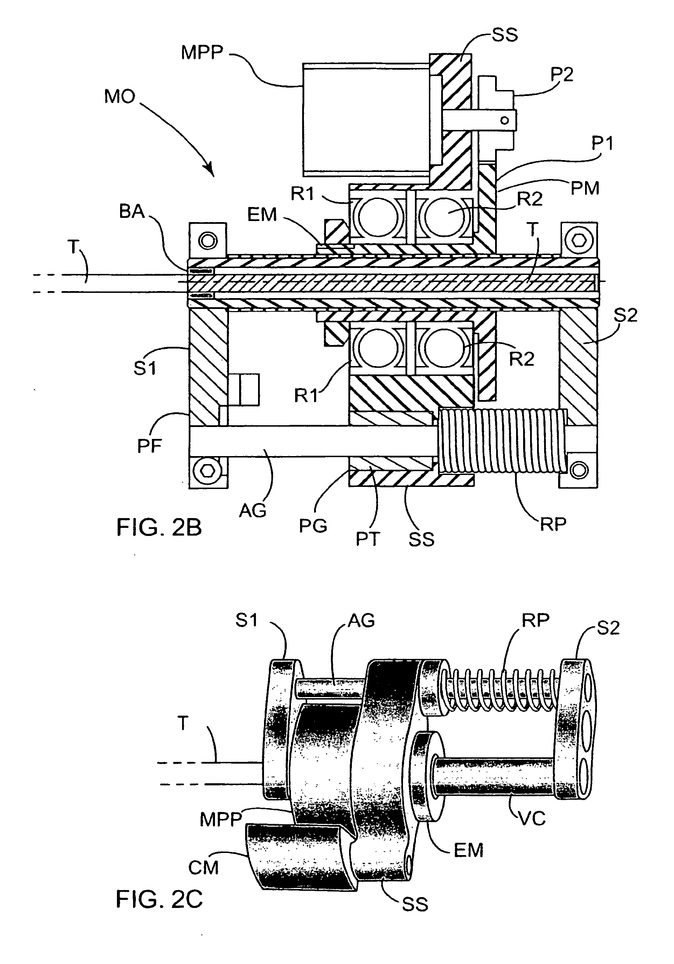

La figure 2B est une vue en coupe longitudinale de la masse oscillante MO du batteur de la figure 2A, qui permet d'en comprendre la structure interne et le fonctionnement. La tige T passe à l'intérieur d'une vis creuse VC présentant un filetage externe ; elle est emmanchée rigidement à l'extrémité distale de ladite vis et guidée à l'extrémité proximale par une bague BA ayant une fonction de rotule. La vis creuse VC est insérée dans un écrou mobile EM, solidaire d'un pignon P1, gisant dans un plan perpendiculaire à la vis VC, qui se couple avec un pignon P2 solidaire du rotor d'un moteur d'actionnement du type pas-à-pas MPP dont l'axe est parallèle à celui de la vis VC. Le moteur d'actionnement MPP et l'écrou mobile EM sont solidarisés en translation par une structure de support SS ; l'écrou EM peut tourner librement par rapport à la structure SS car il est maintenu par l'intermédiaire d'un ou plusieurs roulements R1, R2. La structure de support SS s'étend du côté de la vis VC opposé à celui du moteur et définit un passage de guidage PG dans lequel passe un arbre de guidage AG, parallèle à la vis VC et reliée à cette dernière par deux semelles S1 et S2 situées à ses extrémités ; l'arbre de guidage a une fonction structurelle et empêche toute rotation de l'ensemble moteur MPP - structure SS. Un palier de translation PT facilite le coulissement de la structure SS sur l'arbre de guidage et un ressort de précontrainte RP agit sur la structure SS dans une direction axiale pour éliminer tout jeu. Le dispositif est équilibré d'une telle manière que son centre de gravité se trouve sur l'axe de la tige T, matérialisé sur la figure par une ligne en trait interrompu.

Une rotation du rotor du moteur pas-à-pas MPP induit une rotation de l'écrou, par l'intermédiaire des pignons P1 et P2 qui fournissent un rapport de démultiplication adéquat, par exemple compris entre 1,4 et 2 (1 rotation de l'écrou pour 1,4-2 rotations du moteur) ; le filetage de la vis transforme le mouvement de rotation de l'écrou en une translation axiale de l'ensemble moteur pas-à-pas MPP, écrou mobile EM, roulements R1 et R2, structure de support SS, palier de translation PT. Cet ensemble forme la partie mobile PM de la masse MO, alors que la partie fixe PF est constituée par la vis VC, l'arbre de guidage AG, les deux semelles S1 et S2 et le ressort de précontrainte.

Ce dispositif présente plusieurs caractéristiques souhaitables :
- l'essentiel de sa masse est représenté par la partie mobile PM (notamment grâce au fait que cette dernière inclut le moteur MPP) : cela signifie qu'un faible déplacement de la masse oscillante MO permet une variation de fréquence relativement importante ce qui, à son tour, consent la réalisation d'un batteur très compact ; par comparaison, dans le dispositif du document FR 2 739 670, le moteur d'actionnement est fixe ;
- la masse inerte est minimisée : il s'agit essentiellement de l'élément de support ES et du carter non représenté ; cela est rendu possible par le fait que le moteur MPP, qui détermine le déplacement, fait partie de la masse oscillante MO ; la minimisation de la masse inerte est très importante dans le cas d'un système d'absorption des vibrations comportant plusieurs centaines de batteurs et destiné à être embarqué sur un aéronef ;
- la fonction de ressort, accomplie par la tige T, est découplée de la fonction de transformation d'un mouvement de rotation en un mouvement de translation, accompli par la vis VC qui, elle, ne fléchit pas ; cela permet de déplacer la masse même en présence de vibrations importantes sans provoquer une usure excessive des filetages et sans risquer un blocage de l'écrou ;
- le ressort de précontrainte RP permet d'éliminer tout jeu de la partie mobile PM qui induirait un déréglage du batteur, un bruit parasite et une usure des pièces ;
- l'accord est stable : en l'absence de signal de commande, la partie mobile PM de la masse oscillante MO maintient sa position ; par conséquent, un signal de commande doit être fourni seulement lorsque la fréquence à absorber change, et la fréquence de résonance du batteur doit par conséquent être modifiée ; cela permet de minimiser la consommation électrique et, comme il a été montré plus haut, rend possible une commande centralisée ;
- le dispositif est simple et compact.

La figure 2C montre une vue en perspective d'une variante de batteur accordable DA à déplacement de masse, dans lequel le moteur pas-à-pas MPP est un moteur annulaire, coaxial avec la vis VC et l'écrou mobile EM, commandant directement la rotation de ce dernier sans l'intermédiaire des pignons P1 et P2. Une contre-masse CM est prévue pour équilibrer l'arbre de guidage AG. Par rapport au batteur des figures 2A et 2B, cette variante est plus simple est compacte ; par contre, il faut que le moteur MPP puisse fournir un couple suffisamment élevé pour actionner l'écrou sans démultiplication, et qu'il ait un pas suffisamment petit pour permettre un réglage assez fin de la position de la masse MO.

Bien que l'on ait toujours mentionné uniquement des moteurs pas-à-pas, l'homme du métier comprendra que des moteurs à courant continu, de préférence sans balais, voir des moteurs asynchrones, peuvent être utilisés à la place du moteur d'actionnement MPP. En outre, les batteurs peuvent comporter un capteur de position et des capteurs de fin de course de la partie mobile PM de la masse oscillante MO, qui génèrent des signaux destinés à être utilisés par les contrôleurs UCC et/ou UCL. D'une manière conventionnelle, chaque batteur comporte également un accéléromètre solidaire avec le cadre CA, et en mesurant les vibrations, et un deuxième accéléromètre monté sur la masse oscillante MO, permettant le contrôle en boucle fermée. Dans un souci de simplicité, les connexions électriques et le boîtier contenant l'unité de contrôle locale UCL n'ont pas été représentées. A ce propos on observe que ladite unité de contrôle locale UCL peut être montée sur le cadre CA ou bien sur la masse oscillante MO, ce qui présente l'avantage de réduire ultérieurement la masse inerte et de minimiser la longueur des câbles qui relient l'UCL au moteur d'actionnement MPP. De toute façon, il est avantageux que le boîtier contenant l'unité de contrôle locale UCL soit aussi proche que possible du batteur DA pour minimiser la longueur des câbles reliant ces deux éléments.

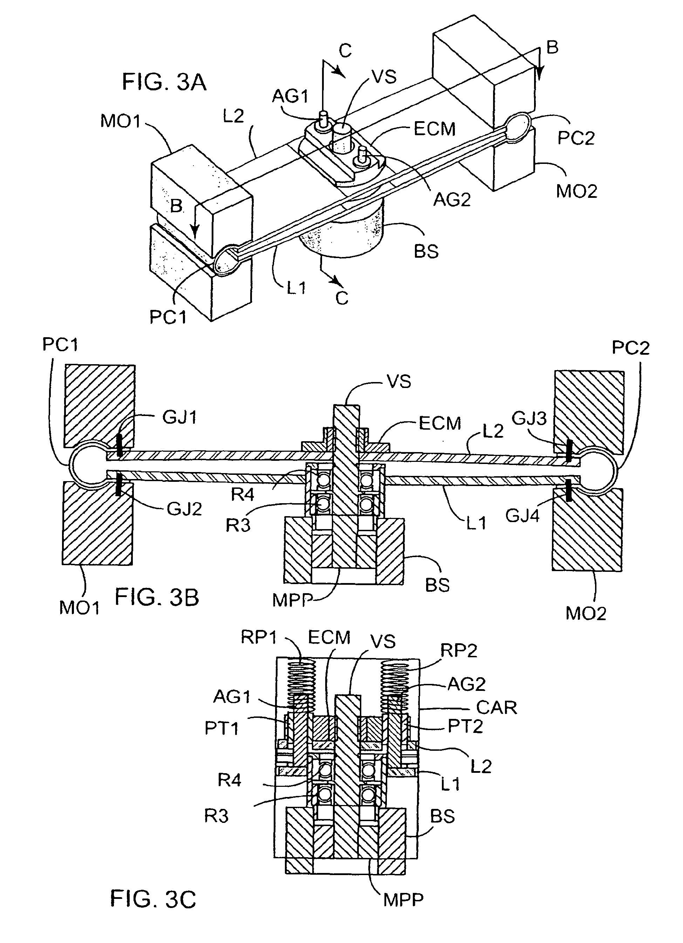

La figure 3A montre une vue en perspective et deux vues en coupe d'un deuxième type de dispositif accordable d'absorption des vibrations DA, dit à papillon avec ressorts à géométrie variable. Il s'agit du dispositif DA représenté très schématiquement sur la figure 1. Les figures 3B et 3C montrent des vues en coupe du dispositif de la figure 3A suivant les lignes B-B et C-C respectivement.

Un batteur de type papillon est essentiellement constitué par deux masses oscillantes, M01 et M02, suspendues aux extrémités opposées d'un ressort à lame fixé en son centre à une base BS, solidaire de la surface dont les vibrations doivent être absorbées. Plus précisément, dans le cas d'un batteur papillon accordable avec ressorts à géométrie variable, le ressort à lame est en fait constitué de deux lames élastiques superposées, L1 et L2, encastrées à leurs extrémités aux masses oscillantes M01 et M02 et espacées entre elles en correspondance de leurs parties centrales. L'accord en fréquence du batteur s'effectue en modifiant l'écartement des parties centrales des lames L1 et L2 à l'aide d'un moteur d'actionnement MPP, de préférence du type pas-à-pas. Plus spécifiquement, les vues en coupe 3B et 3C montrent que dans le dispositif décrit ici une première lame L1 est solidaire de la base BS alors qu'une deuxième lame L2 est fixée à un écrou mobile ECM traversé par une vis VS perpendiculaire aux lames L1 et L2, passant par le centre de gravité du dispositif et entraînée en rotation par le moteur d'actionnement MPP. La vis VS traverse les deux lames en correspondance de leur centre de gravité, mais seulement la deuxième lame L2 subit un déplacement linéaire, par l'intermédiaire de l'écrou ECM, à cause de sa rotation ; en effet, la première lame fixe L1 est séparée de la vis VS par des roulements R3, R4. Deux arbres de guidage, AG1 et AG2, parallèles à la vis VS, sont disposés d'une part et d'autre de cette dernière, dans un plan perpendiculaire à l'axe qui passe par les deux masses oscillantes M01 et MO2. Les arbres de guidage AG1 et AG2 traversent la deuxième lame L2 et l'écrou mobile ECM pour en guider le déplacement par l'intermédiaire de paliers de translation PT1, PT2 destinés à réduire les frottements ; par contre, il n'est pas nécessaire qu'ils traversent la première lame fixe L1. La figure 3C montre également le carter CAR en métal léger qui entoure le dispositif et contre lequel prennent appui deux ressorts de précontrainte RP1 et RP2, coaxiaux avec les arbres de guidage AG1 et AG2, qui agissent sur l'écrou mobile ECM pour éliminer tout jeu. L'utilisation d'un seul arbre de guidage (AG1 ou AG2) et d'un seul ressort de précontrainte est également envisageable.

Comme on peut le voir sur les figures 3A et 3B, de préférence les extrémités des lames L1 et L2 ne sont pas directement encastrées dans les masses oscillantes MO1 et MO2, mais elles sont retenues par des ressorts de pinçage PC1, PC2 ; tout risque de désolidarisation est évité grâce à des goujons GJ1 - GJ4. Cette solution permet de limiter les contraintes internes aux lames, et donc de réduire les risques de rupture par fatigue.

Dans un mode de réalisation alternatif, les deux lames L1, L2 sont remplacées par une lame unique divisée en trois bandes par deux rainures parallèles, courant dans le sens de la longueur de la lame mais pas jusqu'à ses extrémités. La bande centrale est fixée à l'écrou mobile ECM et accomplit la fonction de la lame mobile L1, alors que les deux bandes latérales remplacent la lame fixe L2.

Comme dans le cas du batteur des figures 2A à 2C, l'homme du métier comprendra que des moteurs à courant continu, de préférence sans balais, voire des moteurs asynchrones, peuvent être utilisés à la place du moteur d'actionnement MPP. En outre, les batteurs peuvent comporter un capteur de position et des capteurs de fin de course de l'écrou mobile ECM, qui génèrent des signaux destinés à être utilisés par les contrôleurs UCC et/ou UCL. D'une manière conventionnelle, chaque batteur comporte également un accéléromètre solidaire avec la surface de montage, et en mesurant les vibrations, et un deuxième accéléromètre monté sur les masses oscillantes M01 et M02, ou au moins sur l'une d'entre elles, permettant le contrôle en boucle fermée. Dans un souci de simplicité, les connexions électriques et le boîtier contenant l'unité de contrôle locale UCL n'ont pas été représentées. Avantageusement, le boîtier contenant l'unité de contrôle locale UCL sera aussi proche que possible du batteur pour minimiser la longueur des câbles reliant ces deux éléments.

Pour donner un exemple concret, un batteur tel que décrit ci dessus peut être accordé dans une plage de fréquence de 87 Hz à 117 Hz par un déplacement de l'écrou mobile ECM de moins de 3 mm seulement, et présenter un facteur Q compris entre 100 et 150. Un tel batteur a une masse globale de l'ordre de 1300g et peut être contenu dans un carter CAR en forme de parallélépipède de dimensions 80 mm x 54 mm x 265 mm.

Par rapport à l'état de la technique le plus proche, représenté par le document US 6,009,986, le batteur papillon décrit ci-dessus présente un certain nombre d'avantages.

Tout d'abord, comme il a été discuté plus haut, le système original de liaison entre les masses oscillantes MO1, M02 et les lames élastiques L1, L2, limite la fatigue de ces dernières. Pour comprendre l'importance des problèmes de fatigue dans cette application, on considère qu'un batteur doit avoir une vie de service de l'ordre de 30.000 heures de vol ce qui correspond, en prenant une fréquence de vibration moyenne de 100 Hz, à presque 11 milliards d'oscillations des lames.

Ensuite, le fait de présenter une seule lame L1 mobile, alors que l'autre lame L2 est fixe, simplifie la construction mécanique et réduit les frottements, notamment grâce à la présence d'un seul écrou mobile. Par conséquent, un moteur d'actionnement plus petit peut être utilisé, ce qui réduit la masse inerte du dispositif, et la consommation énergétique est limitée. Par ailleurs, comme une course de 3 mm seulement permet l'accord du batteur sur toute la bande requise, cette solution est tout à fait satisfaisante.

Ensuite, les arbres de guidage AG1, AG2 traversent la lame L1 seulement dans sa partie centrale, qui n'est pratiquement pas soumise à flexion : par conséquent, lesdits arbres de guidage affectent d'une manière très limitée l'élasticité de ladite lame et sa résistance mécanique.

Ces caractéristiques techniques avantageuses peuvent être présentes en combinaison entre elles, comme dans le cas illustré sur les figures, ou séparément.

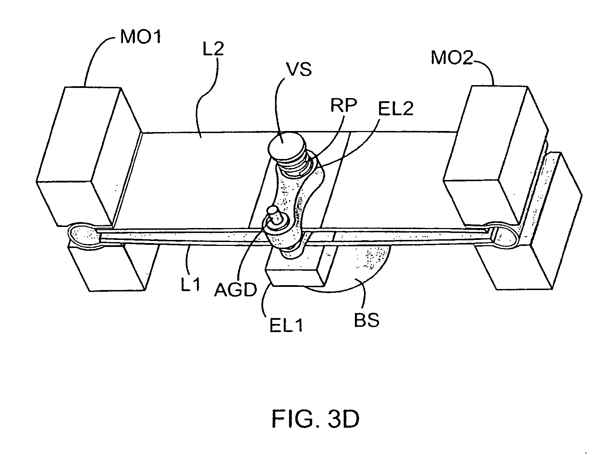

La figure 3D montre une vue en perspective d'une variante du batteur « papillon » dans laquelle un arbre de guidage AGD est prévu dans une position déportée latéralement par rapport à un axe reliant lesdites masses oscillantes M01, M02, de manière à ne pas traverser les lames élastiques L1, L2, ce qui permet d'éviter toute détérioration de leurs propriétés élastiques et de tenue à la fatigue. Dans ce mode de réalisation l'arbre de guidage déporté AGD est fixé à une première extension latérale EL1 solidaire de la base BS ; une deuxième extension latérale EL2, solidaire de l'écrou mobile ECM, est montée coulissante sur ledit arbre de guidage AGD, ce qui permet d'obtenir un effet de guidage. Dans cette variante, le ressort de précontrainte RP est monté directement sur la vis VS. Il est immédiat de généraliser au cas de deux arbres de guidage déportés disposés de manière symétrique par rapport à ladite vis VS.

L'homme du métier comprendra que les batteurs décrits en référence aux figures 2A, 2B, 2C, 3A, 3B et 3C, bien que conçus spécialement pour être utilisés dans la mise en oeuvre d'un système tel que décrit en référence à la figure 1, peuvent également être utilisés dans d'autres systèmes adaptatifs d'absorption des vibrations connus de l'art antérieur. Réciproquement, le système de la figure 1 peut comporter des batteurs du même type ou de types différents, qui peuvent être autres que ceux décrits en référence aux figures 2A, 2B, 2C, 3A, 3B et 3C.

## Revendications

1. Système adaptatif d'absorption des vibrations comportant :
- une pluralité de dispositifs dynamiques accordables d'absorption des vibrations (DA), chacun comprenant au moins un actionneur (MPP) pour modifier sa fréquence d'absorption des vibrations
**caractérisé en ce qu'**il comporte également :
- une pluralité d'unités de contrôle locales (UCL), chacune reliée à un ou plusieurs desdits dispositifs dynamiques accordables (DA), pour générer des signaux de pilotage desdits actionneur ;
- une unité de contrôle centrale (UCC) pour adresser des signaux de commande à chacune desdites unités de contrôle locales (UCL), ladite unité de contrôle centrale (UCC) comportant au moins une entrée (EN1, EN2) pour recevoir une information indicative de la fréquence des vibrations induites par au moins une source de vibrations (MG, MD) et un moyen pour générer lesdits signaux de commande sur la base de ladite information de fréquence ; et
- un bus (BUS) pour transmettre lesdits signaux de commande de ladite unité de contrôle centrale (UCC) aux dites unités de contrôle locales (UCL).

2. Système adaptatif d'absorption des vibrations selon la revendication 1 dans lequel ladite unité de contrôle centrale (UCC) :
- comporte au moins une entrée (EN1, EN2) pour recevoir une information indicative de la fréquence des vibrations induites par chacune d'une pluralité de sources de vibrations (MG, MD) ; et
- est prévue pour générer des signaux de commande adaptés à déterminer l'accord d'un sous-ensemble de ladite pluralité de dispositifs dynamiques accordables d'absorption des vibrations (DA) avec la fréquence des vibrations induites par chacune desdites sources de vibrations (MG ; MD).

3. Système adaptatif d'absorption des vibrations selon l'une des revendications 1 ou 2 dans lequel ladite unité de contrôle centrale (UCC) est prévue pour générer et adresser aux dites unités de contrôle locales (UCL) via ledit bus (BUS) des signaux de commande comprenant des signaux de contrôle pour effectuer :
- initialement, un premier accord en fréquence en boucle ouverte desdits dispositifs dynamiques accordables d'absorption des vibrations (DA) sur la base d'une loi de contrôle en boucle ouverte propre à chaque dispositif (DA) ou à chaque groupe de dispositifs reliés à une même unité de contrôle locale (UCL); et
- ensuite, une correction d'accord en fréquence en boucle fermée ;
et dans lequel lesdites unités de contrôle locales (UCL) sont prévues pour :
- convertir lesdits signaux de contrôle en des signaux de pilotage desdits actionneurs (MPP) ; et
- adresser à ladite unité de contrôle centrale (UCC) des signaux de retour permettant ladite correction en boucle fermée.

4. Système adaptatif d'absorption des vibrations selon la revendication 3 dans lequel ladite unité de contrôle centrale (UCC) est prévue pour modifier de manière adaptative chaque loi de contrôle en boucle ouverte sur la base des corrections en boucle fermée correspondantes.

5. Système adaptatif d'absorption des vibrations selon l'une des revendications 1 ou 2 dans lequel :
- ladite unité de contrôle centrale (UCC) est prévue pour générer et adresser aux dites unités de contrôle locales (UCL) via ledit bus (BUS) des signaux de commande comprenant une information de fréquence des vibrations à absorber ; et dans lequel
- chaque unité de contrôle locale (UCL) est prévue pour générer des signaux de contrôle pour effectuer :
- initialement, un premier accord en fréquence en boucle ouverte desdits dispositifs dynamiques accordables d'absorption des vibrations (DA) sur la base d'une loi de contrôle en boucle ouverte ; et
- ensuite, une correction d'accord en fréquence en boucle fermée ;
et pour convertir lesdits signaux de contrôle en signaux de pilotage desdits actionneurs (MPP).

6. Système adaptatif d'absorption des vibrations selon la revendication 5 dans lequel chaque unité de contrôle locale (UCL) est prévue pour modifier de manière adaptative sa loi de contrôle en boucle ouverte sur la base des corrections en boucle fermée correspondantes.

7. Système adaptatif d'absorption des vibrations selon l'une des revendications précédentes dans lequel ladite unité de contrôle centrale (UCC) est prévue pour effectuer également des opérations de monitorage des disfonctionnement desdits dispositifs dynamiques accordables d'absorption des vibrations (DA).

8. Système adaptatif d'absorption des vibrations selon l'une des revendications précédentes dans lequel ladite unité de contrôle centrale (UCC) est prévue pour effectuer également des opérations d'activation et désactivation desdits dispositifs dynamiques accordables d'absorption des vibrations (DA) sur la base d'un niveau de consommation énergétique dudit système.

9. Application d'un système adaptatif d'absorption des vibrations selon l'une des revendications précédentes à l'absorption des vibrations du fuselage (F) d'un aéronef générées par ses dispositifs de propulsion (MG, MD), dans laquelle ladite information indicative de la fréquence des vibrations induites par au moins une source de vibrations (MG, MD) est une information de cadence de rotation d'au moins un dispositif de propulsion de l'aéronef, tel qu'une hélice ou un rotor.

## Claims

1. Adaptive system for absorbing vibrations, comprising:
- a plurality of tunable dynamic vibration-absorbing devices (DA), each comprising at least one actuator (MPP) for modifying its vibration absorption frequency;
**characterised in that** it also comprises:
- a plurality of local control units (UCL), each connected to one or more of said tunable dynamic devices (DA), for generating operating signals for said actuator;
- a central control unit (UCC) for sending command signals to each of said local control units (UCL), said central control unit (UCC) comprising at least one input (EN1, EN2) for receiving data indicating the frequency of the vibrations induced by at least one source of vibrations (MG, MD) and means for generating said command signals on the basis of said frequency data; and
- a bus (BUS) for transmitting said command signals from said central control unit (UCC) to said local control units (UCL).

2. Adaptive system for absorbing vibrations according to claim 1, wherein said central control unit (UCC):
- comprises at least one input (EN1, EN2) for receiving information indicating the frequency of the vibrations induced by each one of a plurality of vibration sources (MG, MD); and
- is provided in order to generate command signals adapted to determine the tuning of a subassembly of said plurality of tunable dynamic vibration-absorbing devices (DA) with the frequency of the vibrations induced by each of said vibration sources (MG; MD).

3. Adaptive system for absorbing vibrations according to one of claims 1 and 2, wherein said central control unit (UCC) is provided for generating and sending, to said local control units (UCL) via said bus (BUS), command signals comprising control signals for the purpose of:
- initially, carrying out a first open-loop frequency tuning of said tunable dynamic vibration-absorbing devices (DA) on the basis of an open-loop monitoring law associated with each device (DA) or each group of devices connected to the same local control unit (UCL); and
- subsequently, correcting the frequency tuning in a closed loop;
- and wherein said local control units (UCL) are provided for:
- converting said control signals into said operating signals for said actuators (MPP); and
- sending to said central control unit (UCC) return signals allowing said correction to be carried out in a closed loop.

4. Adaptive system for absorbing vibrations according to claim 3, wherein said central control unit (UCC) is provided for adaptively monitoring each open-loop control law on the basis of corresponding closed-loop corrections.

5. Adaptive system for absorbing vibrations according to one of claims 1 or 2, wherein:
- said central control unit (UCC) is provided for generating and sending, to said local control units (UCL) via said bus (BUS), command signals comprising data on the frequency of the vibrations to be absorbed; and wherein
- each local control unit (CTCL) is provided for generating control signals for the purpose of:
- initially, carrying out a first open-loop frequency tuning of said tunable dynamic vibration-absorbing devices (DA) on the basis of an open-loop control law; and
- subsequently, correcting the frequency tuning in a closed loop;
- and for converting said control signals into said operating signals for said actuators (MPP).

6. Adaptive system for absorbing vibrations according to claim 5, wherein each local control unit (UCL) is provided for adaptively modifying its open-loop control law on the basis of the corresponding closed-loop corrections.

7. Adaptive system for absorbing vibrations according to one of the preceding claims, wherein said central control unit (UCC) is provided for also carrying out operations of monitoring the malfunction of said tunable dynamic vibration-absorbing devices (DA).

8. Adaptive system for absorbing vibrations according to one of the preceding claims, wherein said central control unit (UCC) is provided for also carrying out operations of activating and deactivating said tunable dynamic vibration-absorbing devices (DA) on the basis of a level of energy consumption of said system.

9. Application of an adaptive system for absorbing vibrations according to one of the preceding claims to the absorption of vibrations in the fuselage (F) of an aircraft, generates by its propulsion equipment (MG, MD), wherein said data indicating the frequency of the vibrations induced by at least one source of vibrations (MG, MD) is data relating to the rotation rate of at least one propulsion apparatus on the aircraft, such as a screw or a rotor.

## Patentansprüche

1. Adaptives Schwingungsabsorptionssystem mit:
- mehreren abstimmbaren, dynamischen Schwingungsabsorptionseinrichtungen (DA), die jeweils wenigstens einen Aktuator (MPP) zur Modifizierung von seiner Schwingungsabsorptionsfrequenz umfassen;
**dadurch gekennzeichnet, dass** es ferner umfasst:
- mehrere lokale Steuerungseinheiten (UCL), die jeweils mit einer oder mehreren der dynamischen, abstimmbaren Vorrichtungen verbunden sind, um Stellsignale der Aktuatoren zu erzeugen;
- eine zentralen Steuerungseinheit (UCC), um Befehlssignale an jede der lokalen Steuerungseinheiten (UCL) zu senden, wobei die zentrale Steuerungseinheit (UCC) wenigstens einen Eingang (EN1, EN2) zum Empfangen einer Information, die ein Maß für die Frequenz der durch wenigstens eine Schwingungsquelle (MG, MD) induzierten Schwingungen ist, und ein Mittel zum Erzeugen der Befehlssignale auf der Grundlage der Frequenzinformation umfasst; und
- einen Bus (BUS) zum Übertragen der Befehlssignale der zentralen Steuerungseinheit (UCC) zu den lokalen Steuerungseinheiten (UCL).

2. Adaptives Schwingungsabsorptionssystem nach Anspruch 1, in dem die zentrale Steuerungseinheit (UCC):
- wenigstens einen Eingang (EN1, EN2) zum Empfangen von einer Information, die ein Maß für die Frequenz der durch jede der mehreren Schwingungsquellen (MG, MD) induzierten Schwingungen ist;
- vorgesehen ist, um Befehlssignale zu erzeugen, die dazu geeignet sind, die Abstimmung einer Teilmenge der mehreren abstimmbaren, dynamischen Schwingungsabsorptionseinrichtungen (DA) mit der Frequenz der durch jede der Schwingungsquellen (MG, MD) induzierten Schwingungen zu bestimmen.

3. Adaptives Schwingungsabsorptionssystem nach einem der Ansprüche 1 oder 2, in dem die zentrale Steuerungseinheit (UCC) vorgesehen ist, um die Befehlssignale, die Steuerungssignale enthalten, zu erzeugen und über den Bus (BUS) zu den lokalen Steuerungseinheiten (UCL) zu senden, um:
- zunächst eine erste Frequenzabstimmungs-Steuerung der abstimmbaren, dynamischen Schwingungsabsorptionseinrichtungen (DA) auf der Grundlage eines für jede Vorrichtung (DA) oder für jede Gruppe von Vorrichtungen, die mit einer selben lokalen Steuerungseinheit (UCL) verbunden sind, charakteristischen Steuerungsgesetzes,
- und anschließend eine Frequenzabstimmungs-Regelungskorrektur zu bewirken;
und in dem die lokalen Steuerungseinheiten (UCL) vorgesehen sind, um:
- die Steuerungssignale in Stellsignale der Aktuatoren (MPP) umzuwandeln; und
- Rückmeldesignale, die die Regelungskorrektur ermöglichen, an die zentrale Steuerungseinheit (UCC) zu senden.

4. Adaptives Schwingungsabsorptionssystem nach Anspruch 3, in dem die zentrale Steuerungseinheit (UCC) vorgesehen ist, um jedes Steuerungsgesetz auf der Grundlage der entsprechenden Regelungskorrekturen adaptiv zu modifizieren.

5. Adaptives Schwingungsabsorptionssystem nach einem der Ansprüche 1 oder 2, in dem:
- die zentrale Steuerungseinheit (UCC) vorgesehen ist, um Befehlssignale, die eine Frequenzinformation der zu absorbierenden Schwingungen enthalten, zu erzeugen und über den Bus (BUS) zu den lokalen Steuerungseinheiten zu senden; und in dem
- jede lokale Steuerungseinheit (UCL) vorgesehen ist, um Steuerungssignale zu erzeugen, um:
- zunächst eine erste Frequenzabstimmungs-Steuerung der abstimmbaren, dynamischen Schwingungsabsorptionseinrichtungen (DA) auf der Grundlage eines Steuerungsgesetzes; und
- anschließend eine Frequenzabstimmungs-Regelungskorrektur zu bewirken; und um die Steuerungssignale in Stellsignale der Aktuatoren (MPP) umzuwandeln.

6. Adaptives Schwingungsabsorptionssystem nach Anspruch 5, in dem jede lokale Steuerungseinheit (UCL) vorgesehen ist, um sein Steuerungsgesetz auf der Grundlage der entsprechenden Regelungskorrekturen adaptiv zu modifizieren.

7. Adaptives Schwingungsabsorptionssystem nach einem der vorstehenden Ansprüche, in dem die zentrale Steuerungseinheit (UCC) vorgesehen ist, um gleichfalls Operationen der Überwachung von Funktionsstörungen der abstimmbaren, dynamischen Schwingungsabsorptionseinrichtungen (DA) zu bewirken.

8. Adaptives Schwingungsabsorptionssystem nach einem der vorstehenden Ansprüche, in dem die zentrale Steuerungseinheit (UCC) vorgesehen ist, um gleichfalls Operationen der der Aktivierung und Deaktivierung der abstimmbaren, dynamischen Schwingungsabsorptionseinrichtungen (DA) auf der Grundlage eines Energieverbrauchsniveaus des Systems zu bewirken.

9. Anwendung eines adaptives Schwingungsabsorptionssystem nach einem der vorstehenden Ansprüche zur Absorption von Schwingungen des Rumpfes (F) eines Luftfahrzeugs, erzeugt durch seine Antriebsvorrichtungen (MG, MD), in der die Information, die die Frequenz der durch wenigstens eine Schwingungsquelle (MG, MD) induzierten Schwingungen anzeigt, eine Information über die Drehzahl von wenigstens einer Antriebsvorrichtung des Luftfahrzeugs wie etwa ein Propeller oder ein Rotor ist.
